(19) **Europäisches Patentamt**

**European Patent Office**

**Office européen des brevets**

(11) **EP 0 854 350 B1**

(12) **EUROPÄISCHE PATENTSCHRIFT**

(45) Veröffentlichungstag und Bekanntmachung des Hinweises auf die Patenterteilung:
**11.09.2002 Patentblatt 2002/37**

(51) Int Cl.[7]: **G01B 7/34**, G01N 27/00

(21) Anmeldenummer: **97122587.5**

(22) Anmeldetag: **20.12.1997**

(54) **Sondenarray für ein Rastersondenmikroskop**

Probe array for a scanning probe microscope

Réseau de sondes pour une sonde microscope à balayage

(84) Benannte Vertragsstaaten:
**CH DE FR GB LI SE**

(30) Priorität: **21.01.1997 DE 19701701**

(43) Veröffentlichungstag der Anmeldung:
**22.07.1998 Patentblatt 1998/30**

(73) Patentinhaber:
• **Carl Zeiss**
  **89518 Heidenheim (Brenz) (DE)**
  Benannte Vertragsstaaten:
  **CH DE FR LI SE**
• **Carl-Zeiss-Stiftung, trading as Carl Zeiss**
  **89518 Heidenheim (Brenz) (DE)**
  Benannte Vertragsstaaten:
  **GB**

(72) Erfinder: **Völcker, Martin, Dr.**
  **89551 Königsbronn-Zang (DE)**

(56) Entgegenhaltungen:
| | |
|---|---|
| **US-A- 5 015 850** | **US-A- 5 036 490** |
| **US-A- 5 053 995** | **US-A- 5 294 790** |
| **US-A- 5 461 907** | **US-A- 5 517 280** |

**Beschreibung**

Aus der US-A 5 015 850 ist ein Sondenarray für Rastersondenmikroskope, insbesondere für Tunnel- und Kraftmikroskope, bekannt. Die Einzelsonden bestehen jeweils aus einem dünnen Balken, der senkrecht zu seiner Längsrichtung auslenkbar ist, und einer am freien Ende des Balkens angeordneten Probenspitze. Diese Einzelsonden sind als zweidimensionales Gitter angeordnet, wobei die Längsachsen der Balken parallel zu einer Gitterrichtung des zweidimensionalen Gitters ausgerichtet sind. Die Abstände der Sondenspitzen voneinander sind dadurch in einer Richtung wesentlich größer als die Länge der Balken. Mit dieser Anordnung sind deshalb zumindest in einer Richtung des Arrays keine Sondenabstände erzielbar, die kleiner als die Balkenlängen sind.

Aus der US 5 036 490 A ist ein Sondenarray nach dem Oberbegriff des Anspruches 1 bekannt. Die einzelnen Sonden des Sondenarrays sind unmittelbar aus einem Substrat bimorphen Piezomaterials durch u-förmige Ausschnitte geformt. Diese Anordnung der einzelnen Sonden ermöglicht Sondenabstände, die kleiner als die Länge der Balken den Einzelsonden sind. Die Steifigkeit des Substrates senkrecht zur Balkenrichtung der Einzelsonden entspricht jedoch der Steifigkeit der Balken und ist entsprechend gering.

Aus der US-A 5 360 978 ist ein weiteres Sondenarray für Tunnelmikroskope bekannt, bei dem die Einzelsonden in mehreren zueinander parallelen Zeilen, die jeweils wieder eine Vielzahl von Einzelsonden aufweisen, angeordnet sind. Die Sondenspitzen sind hier jedoch nicht an einzelnen Balken aufgenommen. Ein solches Sondenarray eignet sich deshalb nicht für Mikroskope, bei denen der Abstand zwischen den Sondenspitzen und der zu vermessenden Probe entsprechend der zwischen den Sondenspitzen und der Probe wechselwirkenden atomaren Kräfte geregelt wird.

Aus der US 5 517 280 ist ein eindimensionales lineares Sondenarray für die Nahfeldphotolithographie bekannt. Bei dieser Anordnung sind die einzelnen Sondenspitzen an auslenkbaren Balken angeordnet. Die einzelnen Balken sind parallel zur Längsrichtung der Balken als Array angeordnet. Ein zweidimensionales Sondenarray ist in dieser Schrift nicht beschrieben.

In der US-A 5 461 907 ist eine lineare Anordnung mehrerer zweibalkiger Strukturen, die jeweils v-förmig sind, für die Kraftmikroskopie beschrieben. Eine der zweibalkigen Strukturen weist eine Sonde für die Kraftmikroskopie und die beiden anderen Strukturen jeweils einen scharfkantigen Vorsatz zur Mikromanipulation (bewegen und schneiden) von mikroskopischen Objekten auf. Auch in dieser Schrift ist kein zweidimensionales Sondenarray beschrieben.

Die vorliegende Erfindung soll ein Sondenarray für Rastermikroskope angeben, das eine Vielzahl Einzelsonden mit einem oder mehreren Balken in einer zweidimensionalen Gitteranordnung aufweist und bei dem der Abstand der Sondenspitzen in zwei zueinander senkrechten Richtungen des Gitters kleiner als die Länge der Balken ist. Dieses Ziel wird durch ein Sondenarray mit den Merkmalen des Anspruches 1 gelöst. Weitere vorteilhafte Ausführungsbeispiele der Erfindung ergeben sich aus den Merkmalen der abhängigen Ansprüche.

Das erfindungsgemäße Sondenarray hat eine Vielzahl von Einzelsonden, die in Form eines zweidimensionalen Gitters zueinander angeordnet sind. Jede Einzelsonde weist eine Sondenspitze auf, die an einem oder an zwei Balken aufgenommen ist. Die Längsrichtungen der Balken schließen mit den Richtungen des Gitters, also mit den mathematischen Gittervektoren, die einen Punkt des Gitters in den nächst benachbarten Gitterpunkt überführen, jeweils einen Winkel ein, der ungleich 0° oder 180° beträgt.

Durch die zueinander geneigte Anordnung der Balken der Einzelsonden relativ zu den Translationsvektoren des Gitters kann die Länge der Balken ein Vielfaches des Rasterabstandes nächst benachbarter Gitterpunkte betragen. In der Terminologie der Kristallphysik bedeutet dieses, daß eine Dimension der Einheitszelle, die jede Einzelsonde einnimmt, größer als der Rasterabstand nächst benachbarter Gitterpunkte ist.

Die Balken der Einzelsonden sind über Abstandsstücke an einer gemeinsamen Trägerstruktur angeordnet.

Vorzugsweise weist jede Einzelsonde zwei Balken auf, die v-förmig zueinander angeordnet sind. Durch die zweibalkige Anordnung, die beispielsweise aus der o.g. US-A 5 461 907 bekannt ist, weisen die Einzelsonden eine höhere Torsionssteifigkeit als Einzelsonden mit nur einem Balken auf.

Die Trägerstruktur, an der über die Abstandsstücke die Balken aufgenommen sind, sollte parallel zur Ebene der Balken ausgerichtet sein.

Für einen Nachweis der interatomaren Wechselwirkung zwischen den Sondenspitzen und der abgerasterten Probe und eine Nachregelung dieses Abstandes auf einen festen Wert der interatomaren Wechselwirkung sind die Balken senkrecht zur Längsachse der Balken und in Richtung der Probenspitze durch Balkenbiegung auslenkbar. Um einen Kontakt der Trägerstruktur mit der Probe auszuschließen, sind die Sondenspitzen der Einzelsonden länger als die maximale Verschiebung der Sondenspitzen, die sich bei maximaler Auslenkung der Balken ergibt. Alternativ oder zusätzlich können die Balken auch eine durch den Herstellungsprozeß aufgeprägte, zu den Sondenspitzen gerichtete Krümmung aufweisen.

Die Trägerstruktur und die Balken weisen weiterhin vorzugsweise für jede Einzelsonde jeweils eine elektrisch leitende Elektrode auf. Diese Elektroden bilden einen Kondensator, dessen Kapazität sich bei einer Auslenkung der Balken einer Sondenspitze ändert. Diese Kapazitätsänderung kann zur Abstandsregelung zwischen der Sondenspitze und der Probe herangezogen werden. Die Balken mit den Elektroden dienen gleichzeitig als Stellelemente, indem durch die Feldstärke einer an die Elektroden angelegten Spannung eine gezielte, für einen konstanten Abstand zwischen jeder Sondenspitze und der Probe erforderliche Balkenbiegung erzeugt wird.

Das erfindungsgemäße Sondenarray findet vorzugsweise Einsatz in einem Rastersondenmikroskop mit einer Steuerungselektronik für eine parallele und voneinander unabhängige Messung von Kapazitätsänderungen der Einzelsonden und eine gezielte Biegung des Balkens jeder Einzelsonde für eine Bewegung der Einzelsonden in Richtung der Sondenspitze. Durch die Anordnung vieler Einzelsonden in einem zweidimensionalen Array findet die Bildaufzeichnung parallel an einer der Sondenzahl entsprechenden Anzahl an Punkten auf der abzurasternden Probe statt. Gegenüber Rastersondenmikroskopen mit nur einer einzigen Sonde wird dadurch die Bildaufnahmezeit um einen dem Kehrwert der Sondenzahl entsprechenden Faktor verkürzt. Bei einem weiterhin vorteilhaften Ausführungsbeispiel sind die Sondenspitzen als Lichtleiter ausgebildet. Ein derartiges Sondenarray mit lichtleitenden Sondenspitzen kann in einem optischen Nahfeldmikroskop Einsatz finden.

Nachfolgend werden Einzelheiten der Erfindung anhand der in den Figuren dargestellten Ausführungsbeispiele näher erläutert. Im einzelnen zeigen:

Figur 1a    eine Aufsicht auf eine Einzelsonde eines erfindungsgemäßen Sondenarrays bei Blick auf die Sondenspitze;

Figur 1b    einen Schnitt durch die Einzelsonde der Figur 1a entlang der Schnittlinie Ib-Ib;

Figur 2a    eine Aufsicht auf ein erfindungsgemäßes Sondenarray, bei Blick auf die Sondenspitzen, mit 16 als regelmäßiges zweidimensionales Gitter angeordneten Einzelsonden;

Figur 2b    einen Schnitt durch das Sondenarray in Figur 2a entlang der Line IIb-IIb;

Figur 2c    einen vergrößerten und vereinfachten Ausschnitt aus der Figur 2a und

Figur 3    die Prinzipskizze eines optischen Nahfeldmikroskopes als Beispiel eines Rastersondenmikroskopes mit einem erfindungsgemäßen Sondenarray.

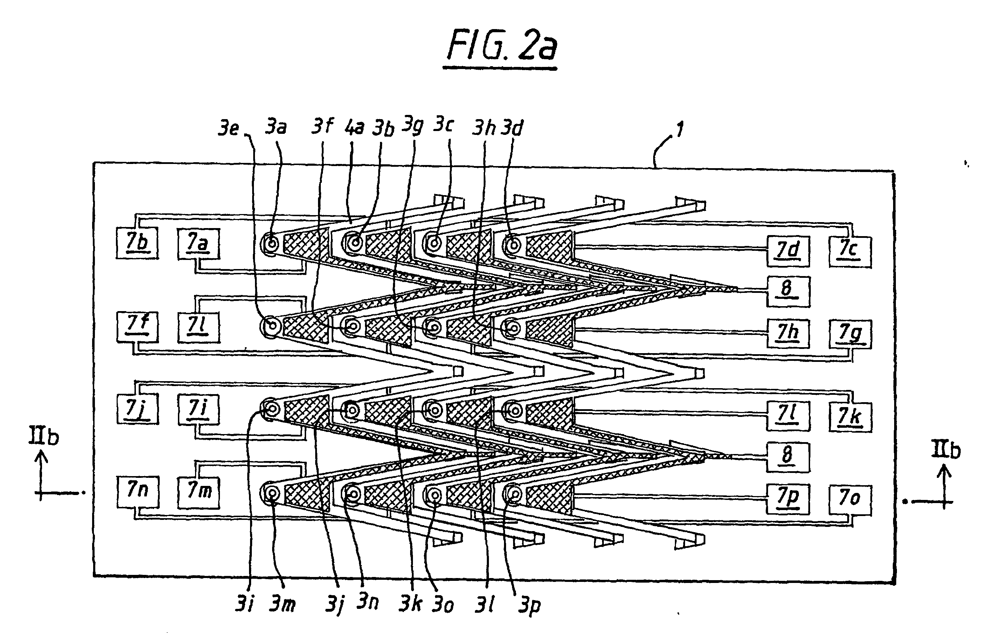

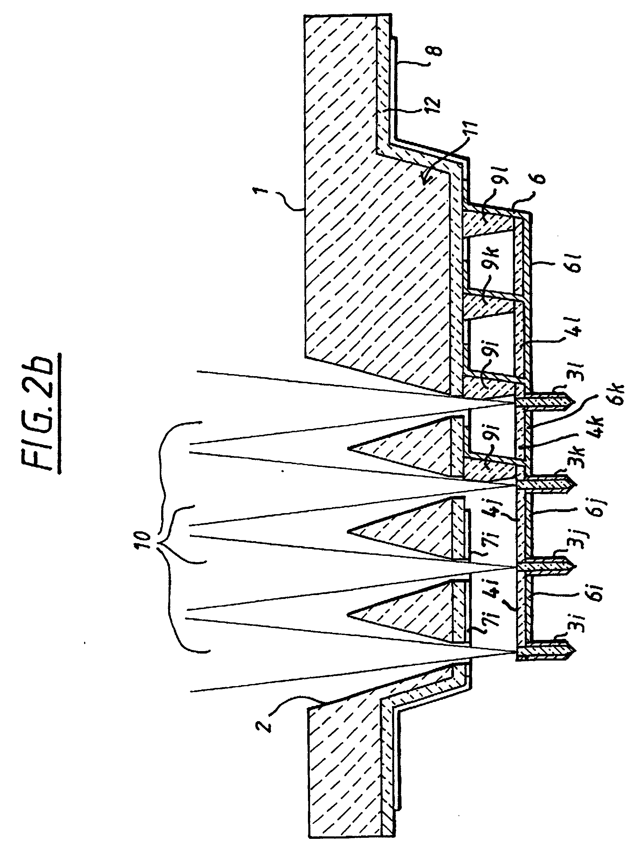

Das in den Figuren 2a und 2b dargestellte Sondenarray besteht aus einer Trägerstruktur (1) und insgesamt 16 daran angeordneten Einzelsonden, die in Form eines regelmäßigen zweidimensionalen Gitters angeordnet sind. Die Probenspitzen der 16 Einzelsonden sind in der Figur 2a mit (3a - 3p) bezeichnet.

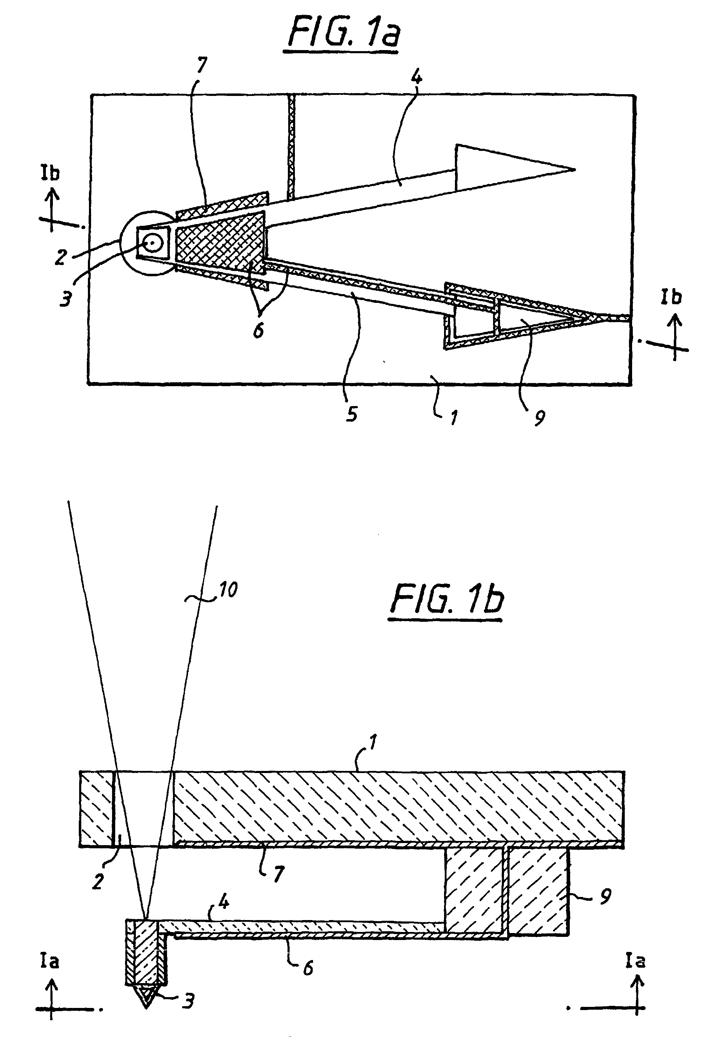

Der Aufbau der 16 Einzelsonden wird nachfolgend anhand der Figuren 1a und 1b näher erläutert. Jede Einzelsonde weist zwei v-förmig zueinander angeordnete Balken (4, 5) auf, deren Länge in Längsrichtung der Balken ca. 40 bis 60μm beträgt. Diese Balken (4, 5) sind über Abstandshalter (9) an der Unterseite der Trägerstruktur (1) aufgenommen. An der Spitze des durch die beiden Balken (4, 5) gebildeten V, also dort, wo die beiden Balken (4, 5) miteinander verbunden sind, ist an den Balken (4, 5) die Sondenspitze (3) aufgenommen. Im dargestellten Ausführungsbeispiel besteht die Sondenspitze (3) aus einem transparenten Innenkörper mit einer dünnen äußeren Metallbeschichtung. Solche transparenten Sondenspitzen (3) sind insbesondere für die optische Nahfeldmikroskopie geeignet. Zum Einkoppeln eines Lichtstrahls (10) in das der Trägerstruktur (1) zugewandte Ende der Sondenspitze (3) ist in der Trägerstruktur (1) ein Loch (2) vorgesehen.

Auf der der Sondenspitze (3) zugewandten Seite der Trägerstruktur (1) weist die Trägerstruktur (1) eine elektrisch leitende Beschichtung (7) auf. Eine weitere leitende Beschichtung (6) ist auf einem der beiden Balken (5) und im Bereich, in dem beide Balken (4, 5) nahe zueinander benachbart sind, vorgesehen. Der Abstand der beiden leitenden Beschichtungen (6, 7) entspricht der Dicke des Abstandshalters (9) und beträgt etwa 5 bis 10 μm. Die beiden elektrisch leitenden Beschichtungen (6, 7) bilden einen Kondensator, dessen bei einer Auslenkung der beiden Balken (4, 5) sich ändernde Kapazität ein Maß für einen sich ändernden Abstand zwischen der Sondenspitze (3) und einer in der Figur 1b nicht dargestellten Probe bildet. Der durch die Beschichtungen (6, 7) gebildete Kondensator kann durch Anlegen einer Gleichspannung gleichzeitig auch als Stellelement dienen, da eine angelegte Spannung eine Biegung des Balkens senkrecht zur Längsachse des Balkens bewirkt.

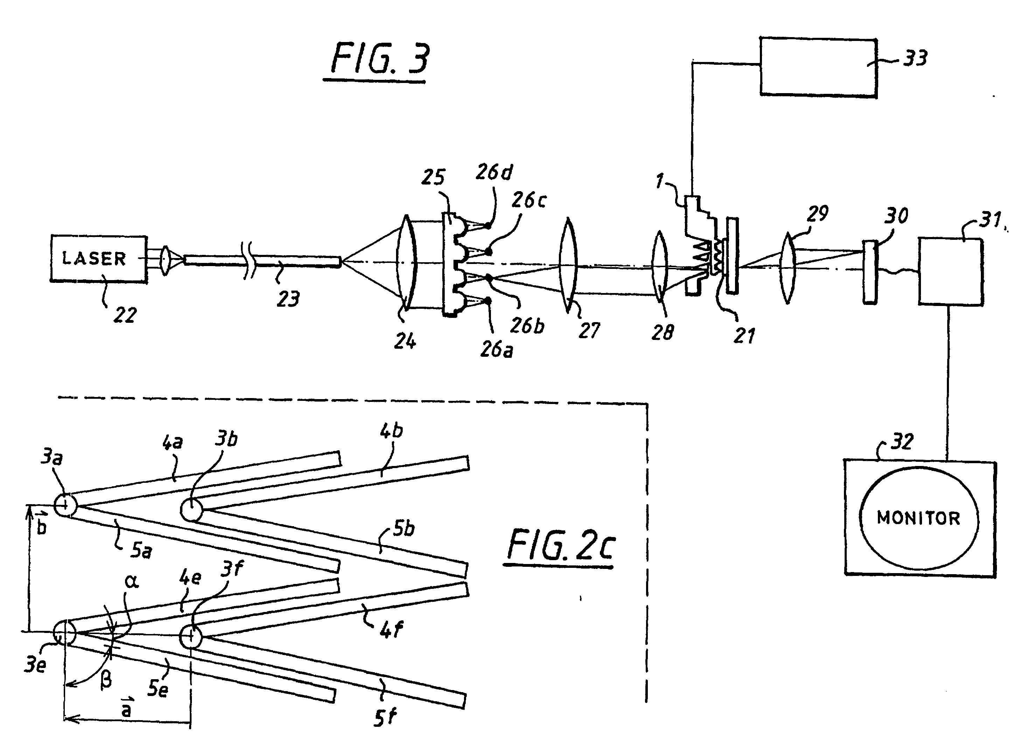

In dem Sondenarray nach Figur 2a sind die Einzelsonden mit den Sondenspitzen (3a - 3p) derart zueinander angeordnet, daß die Mittelachsen der Sondenspitzen (3a - 3p) ein regelmäßiges, zweidimensionales Gitter bilden. Der Abstand der Mittelachsen nächstbenachbarter Sondenspitzen (3a, 3b; 3a, 3e) ist in beiden Translationsrichtungen des zweidimensionalen Gitters identisch und kleiner als die Länge der Balken (4a, 5a) der Einzelsonden. Um eine derart kompakte Anordnung der Einzelsonden zu erreichen, sind die Einzelsonden ineinander verschachtelt angeordnet. Zur näheren Beschreibung dieser verschachtelten Anordnung der Einzelsonden sei auf die Figur 2c verwiesen, in der vier Sondenspitzen (3a, 3b, 3e, 3f) jeweils nur mit ihren beiden Balken (4a, 5a; 4b, 5b; 4e, 5e; 4f, 5f) dargestellt sind. Die Sondenspitzen (3a, 3b, 3e, 3f) bilden ein regelmäßiges Gitter mit den Gittervektoren ($\vec{a}$, $\vec{b}$), durch die die Gitterpunkte (Mittelachsen der Sondenspitzen (3a, 3b, 3e, 3f)) ineinander transformiert werden. Die Gitterpunkte stellen in der Terminologie der Krystallphysik translatorisch identische Punkte dar. Sie resultieren aus einem Ausgangsgitterpunkt durch Translation in Richtung ganzzahliger Linearkombinationen der Gittervektoren ($\vec{a}$, $\vec{b}$), also durch Translation mit dem Vektor

$$\vec{t} = \vec{ma} + \vec{nb},$$

wobei m, n ganze Zahlen sind. Wesentlich für die dichte Anordnung der Sondenspitzen beim erfindungsgemäßen Sondenarray ist, daß die Balken (4a, 5a; 4b, 5b; 4e, 5e; 4f, 5f) von null und 180° abweichende Winkel (α, β) mit den Gittervektoren ($\vec{a}$, $\vec{b}$) einschließen. Die Winkel α, β werden dabei so gewählt, daß eine hinreichend tiefe Verschachtelung der Einzelsonden und damit die gewünschten Abstände der Sondenspitzen in zwei zueinander sekrechten Richtungen realisierbar sind. Dadurch können die Einzelsonden derart verschachtelt zueinander angeordnet werden, daß die Abstände nächstbenachbarter Sondenspitzen kleiner als die Länge der Balken (4a, 5a; 4b, 5b; 4e, 5e; 4f, 5f) sind.

Das Sondenarray mit 4 x 4 Einzelsonden in Figur 2a ist aus zwei identischen Bereich mit jeweils 2 x 4 Sondenspitzen aufgebaut. Der erste Bereich enthält die 8 Sondenspitzen (3a - 3h) und der zweite Bereich die 8 Sondenspitzen (3i - 3p). Die elektrisch leitenden Beschichtungen der Balken (4) der 8 Einzelsonden eines jeden Bereiches sind miteinander verbunden, so daß für diese leitende Beschichtung nur eine einzige Kontaktierung (8) in jedem Bereich erforderlich ist. Die elektrisch leitenden Beschichtungen an der Unterseite der Trägerstruktur (1) sind dagegen zueinander elektrisch isoliert, so daß 8 voneinander unabhängige Kondensatoren entstehen. Entsprechend der 8 Einzelsonden in jedem Bereich sind deshalb auch 8 Kontaktierungen (7a - 7g; 7i - 7p) der elektrisch leitenden Beschichtungen auf der Unterseite der Trägerstruktur (1) vorgesehen.

An dieser Stelle sei darauf hingewiesen, daß die elektrisch leitende Beschichtung auch auf beiden Balken einer jeden Einzelsonde möglich ist. Weiterhin sei darauf hingewiesen, daß ein Teil der Kontaktierungen für die elektrisch leitenden Beschichtungen an der Unterseite der Trägerstruktur (1) auf der einen Seite des Einzelsonden des Bereiches und die Kontaktierung der verbleibenden leitenden Beschichtungen auf der anderen Seite der Einzelsonden des Bereiches erfolgt.

Selbstverständlich können auch Sondenarrays mit mehr als 16 Einzelsonden einfach dadurch realisiert werden, daß weitere Bereiche mit jeweils 8 Einzelsonden hinzugefügt werden. Es ergeben sich dann Sondenarrays mit 3 x 8, 4 x 8 usw. Einzelsonden. Prinzipiell kann auch jeder Bereich mehr als 8 Einzelsonden aufweisen, indem eine größere Anzahl an Einzelsonden ineinander verschachtelt wird. Denkbar wären hier 2 x 6, 2 x 8, 2 x 10 usw. Einzelsonden in jedem Bereich. Die Maximalzahl der ineinander verschachtelbaren Einzelsonden ist dabei nur durch die Anzahl der aus Platzgründen nebeneinander realisierbaren Leiterbahnen für die elektrische Kontaktierung beschränkt. Sollten sich Platzprobleme bei den Leiterbahnen ergeben, so können diese auch, wie in der Mikroelektronik üblich, in unterschiedlichen Ebenen geführt werden, so daß jede beliebige Anzahl an Einzelsonden möglich ist.

Die Herstellung des erfindungsgemäßen Sondenarrays kann mit den in der Mikrostrukturierung üblichen Verfahren erfolgen. Als Trägerstruktur kann von einem Siliziumwafer mit einer Dicke von ca. 60 μm ausgegangen werden. In einem ersten Schritt wird durch anisotropes Naßätzen auf einer Seite des Wafers der Randbereich weggeätzt, so daß ein erhabener mittlerer Teil (11) entsteht. Die weggeätzten Randbereiche dienen später als Bondingflächen für die elektrische Kontaktierung. In einem zweiten Verfahrensschritt wird durch CVD-Technologie sowohl der erhabene Bereich als auch der abgeätzte Bereich mit einer 1 μm dicken Isolierschicht (12) aus Siliziumnitrit überzogen und auf der gegenüberliegenden Seite durch anisotropes Naßätzen pyramidenförmige Löcher (2) für den späteren Lichtdurchtritt durch das Siliziumsubstrat (1) geschaffen.

In einem dritten Verfahrensschritt wird durch Zerstäuben von Platin eine 0,2 μm dicke erste Elektrodenschicht für die leitende Beschichtung (7, 7i, 7j), die Kontaktierungsflächen (8, 7a - 7p) und die erforderlichen Leiterbahnen geschaffen. Nachfolgend werden durch CVD von Siliziumnitrit die Abstandshalter (9, 9i - 9l), die später zur Aufnahme der Balken (4, 4i - 4l, 5) dienen und eine Dicke von 5 bis 10 μm aufweisen, neben den bereits vorhandenen Leiterbahnen geschaffen. An dieser Stelle ist es ohne Bedeutung, in welcher Reihenfolge die Abstandshalter und die Elektrodenschicht aufgebracht werden.

In einem vierten Verfahrensschritt wird durch Zerstäuben eine Opferschicht aus Zinkoxyd aufgebracht, dessen Dicke der zuvor aufgebrachten Siliziumnitrit Abstandshalter entspricht. In einem fünften Verfahrensschritt werden durch CVD von Siliziumnitrit die Balken (4, 4i 4l, 5) hergestellt. Die dazu auf die Opferschicht aufgebrachte Siliziumnitritschicht hat eine Dicke von ca. 1 μm. Durch nachfolgendes Bedampfen mit Gold wird eine zweite Elektrodenschicht (6i - 6l) mit einer Dicke von 0,2 μm auf die Balken (4i - 4l) aufgebracht, durch die die leitende Verbindung (6) auf jeweils einem der beiden Balken jeder Einzelsonde und die Verbindung der daraus resultierenden Elektroden mit der von der gemeinsamen Kontaktierung (8) ausgehenden Leiterbahn der ersten Elektrodenschicht über die Abstandshalter (9i - 9l) erreicht wird. In einem siebten Verfahrensschritt werden die Sondenspitzen (3i - 3l) aufgebaut. Dazu wird zunächst eine ca. 5 bis 10 μm dicke Siliziumnitritschicht durch CVD an der Stelle der Sondenspitze aufgebaut und nachfolgend von außen mit Aluminium bedampft. Das Siliziumnitrit dient später als Lichtleiter bei der optischen Nahfeldmikroskopie.

Nachfolgend werden Löcher durch Ionenätzen durch die Isolierschicht an den für den Lichtdurchtritt vorgesehenen Stellen geschaffen. Als letzter Schritt braucht dann lediglich die Opferschicht entfernt zu werden. Das Sondenarray ist damit fertiggestellt und braucht lediglich noch an den geschaffenen Kontaktierungsstellen (8, 7a - 7p) gebondet zu werden und kann nachfolgend beispielsweise in das in der Figur 3 schematisch dargestellte optische Nahfeldmikroskop eingesetzt werden.

In der Figur 3 ist das oben anhand der Figuren 2a - 2c erläuterte Sondenarray verkleinert dargestellt und die Trägerstruktur des Sondenarrays wiederum mit dem Bezugszeichen (1) versehen. Mit (22) ist die für die optische Nahfeldmikroskopie benötigte Lichtquelle, beispielsweise ein Laser bezeichnet. Das aus der Lichtquelle (22) austretende Licht wird zunächst über eine Lichtleitfaser (23) zu dem eigentlichen Nahfeldmikroskop geführt. Das aus der Lichtleitfaser austretende Licht wird durch einen Kollimator (24) kollimiert und durch ein nachfolgendes Linsenarray (25) fokussiert. Das Linsenarray (25) weist dabei so viele Einzellinsen auf, wie das Sondenarray (1) Einzelsonden hat. In der hinteren Brennebene des Linsenarrays (25) entsteht demzufolge eine der Anzahl der Einzelsonden entsprechende Anzahl an Foki (26a - 26d). Durch eine nachfolgende Abbildungsoptik (27, 28) mit 5-facher Verkleinerung werden die Foki (26a - 26d) des Linsenarrays (25) verkleinert auf die Rückseit der Sondenspitzen des Sondenarrays abgebildet und dadurch in die Sondenspitzen eingekoppelt.

Das in die Sodenspitzen eingekoppelte Licht tritt auf der gegenüberliegenden Seite der Sondenspitze wieder aus und wechselwirkt in bekannter Weise mit der Probe (21). Das durch die Probe (21) hindurchtretende Licht wird durch eine nachfolgende Vergrößerungsoptik (29) um einen Faktor 3 vergrößert auf einen ortsauflösenden Detektor (30), der für jede Einzelsonde des Sondenarrays (1) eine unabhängige Sensorfläche aufweist, zugeleitet und von diesem detektiert. Die Ausgangssignale des Detektors (30) werden in einer Videokarte (31) zu einem Videobild verarbeitet und nachfolgend auf einem Monitor (32) dargestellt.

Weiterhin ist eine Steuerelektronik (33) vorgesehen, die mit dem Sondenarray (1), oder genauer, mit den Kontaktierungen (6, 7a - 7o) des Sondenarrays (1) verbunden ist und anhand der Kapazität der Kondensatoren der Einzelsonden Auslenkungen der Balken der Einzelsonden unabhängig voneinander detektiert und über eine an die Kondensatoren angelegte Spannung den Abstand zwischen den einzelnen Sondenspitzen und der Oberfläche des Präparates (21) jeweils auf einen konstanten Wert regelt.

Alternativ zu dem dargestellten Ausführungsbeispiel kann bei nicht-transparenten Präparaten (21) die Detektion des Lichtes auch in Reflexion erfolgen. In diesem Fall wäre der Detektor (30) auf derselben Seite der Probe (21) anzuordnen, wie das Sondenarray (25).

Bei dem anhand der Figuren 2a - 2c beschriebenen Sondenarray beträgt der Abstand der Sondenspitzen weniger als 100µm, typischerweise 10 bis 30µm. Die Länge der Balken beträgt dagegen ca. 40µm, damit eine hinreichend geringe Federkonstante des Balkens und damit eine hinreichende Empfindlichkeit der Auslenkung der Balken aufgrund Änderungen der interatomaren Wechselwirkungen zwischen den Probenspitzen und der Probe meßbar sind.

## Patentansprüche

1. Sondenarray für ein Rastersondenmikroskop mit

   - einer Vielzahl Einzelsonden, die an einer gemeinsamen Trägerstruktur (1) angebracht sind,
   - wobei jede der Einzelsonden jeweils eine Sondenspitze (3a - 3p) an einem oder mehren Balken (4a, 4b, 4e, 4f, 5a, 5b, 5e, 5f) aufweist,
   - wobei die Balken (4a, 4b, 4e, 4f, 5a, 5b, 5e, 5f) senkrecht zur Balkenrichtung biegbar sind,
   - wobei die Einzelsonden in Form eines zweidimensionalen Gitters angeordnet sind,
   - wobei die Richtungen der Balken (4a, 4b, 4e, 4f, 5a, 5b, 5e, 5f) mit beiden Richtungen des Gitters (a, b) einen Winkel ungleich 0° oder 180° einschließen, und
   - wobei die Längen der Balken (4a, 4b, 4e, 4f, 5a, 5b, 5e, 5f) größer als die Gitterabstände des Gitters sind,

   **dadurch gekennzeichnet,**

   - **daß** die Balken (4a, 4b, 4e, 4f, 5a, 5b, 5e, 5f) der Einzelsonden jeweils über Abstandsstücke (9i, 9j, 9k, 9l) an der Trägerstruktur (1) aufgenommen sind.

2. Sondenarray nach Anspruch 1, wobei daß die Balken (4a, b, e, f, 5a, b, e, f) in einer Ebene parallel zur Ebene der Trägerstruktur (1)angeordnet sind,.

3. Sondenarray nach einem der Ansprüche 1 oder 2, wobei die Balken (4a, b, e, f, 5a, b, e, f) über jeweils einen Weg senkrecht zur Längsachse der Balken auslenkbar sind und wobei die Länge der Sondenspitzen (3a, 3j, 3k, 3l) größer als der maximale Weg der Auslenkung ist.

4. Sondenarray nach einem der Ansprüche 1 - 3, wobei die Balken eine Krümmung in Richtung der Sondenspize aufweisen.

5. Sondenarray nach einem der Ansprüche 1 - 4, wobei die gemeinsame Trägerstruktur (1) und die Balken jeweils eine elektrisch leitende Elektrode (6, 7a - 7p) aufweisen.

**6.** Sondenarray nach einem der Ansprüche 1 - 5, wobei die Trägerstruktur den Sondenspitzen zugeordnete Löcher (2) für einen Lichtdurchtritt aufweist.

**7.** Rastersondenmikroskop mit einem Sondenarray nach einem der Ansprüche 1 - 6.

**8.** Rastersondenmikroskop nach Anspruch 7, wobei eine Steuerungselektronik (29) für eine parallele und voneinander unabhängige Ansteuerung von Elektroden der Einzelsonden für einen Nachweis einer geänderten Auslenkung der Einzelsonden in Richtung der Sondenspitzen vorgesehen ist.

**Claims**

**1.** Probe array for a scanning probe microscope, having

- a multiplicity of individual probes which are fitted on a common supporting structure (1),
- each of the individual probes in each case having a probe tip (3a - 3p) on one or more bars (4a, 4b, 4e, 4f, 5a, 5b, 5e, 5f),
- it being possible to bend the bars (4a, 4b, 4e, 4f, 5a, 5b, 5e, 5f) perpendicular to the bar direction,
- the individual probes being arranged in the form of a two-dimensional grid,
- the directions of the bars (4a, 4b, 4e, 4f, 5a, 5b, 5e, 5f) enclosing with the two directions of the grid (a, b) an angle equal to 0° or 180°, and
- the lengths of the bars (4a, 4b, 4e, 4f, 5a, 5b, 5e, 5f) being greater than the grid spacings of the grid,

**characterized**

- **in that** the bars (4a, 4b, 4e, 4f, 5a, 5b, 5e, 5f) of the individual probes are in each case accommodated on the supporting structure (1) via spacers (9i, 9j, 9k, 9l).

**2.** Probe array according to Claim 1, in which the bars (4a, b, e, f, 5a, b, e, f) are arranged in a plane parallel to the plane of the supporting structure (1).

**3.** probe array according to one of Claims 1 or 2, in which the bars (4a, b, e, f, 5a, b, e, f) can be deflected over a distance perpendicular to the longitudinal axis of the bars in each case, and the length of the probe tips (3a, 3j, 3k, 3l) being greater than the maximum distance of the deflection.

**4.** Probe array according to one of Claims 1-3, in which the bars have a curvature in the direction of the probe tip.

**5.** Probe array according to one of Claims 1-4, in which the common supporting structure (1) and the bars in each case have an electrically conducting electrode (6, 7a - 7p).

**6.** Probe array according to one of Claims 1-5, in which the support structure has holes (2), assigned to the probe tips, for passage of light.

**7.** Scanning probe microscope with a probe array according to one of Claims 1-6.

**8.** scanning probe microscope according to Claim 7, in which an electronic control system (29) is provided for driving electrodes of the individual probes in parallel with and independently of one another in order to detect a changed deflection of the individual probes in the direction of the probe tips.

**Revendications**

**1.** Réseau de sondes pour un microscope à sondes à balayage comprenant

- une pluralité de sondes individuelles qui sont fixées à une structure porteuse commune (1),
- chaque sonde individuelle présentant à chaque fois une pointe de sonde (3a - 3p) sur une ou plusieurs poutrelles (4a, 4b, 4e, 4f, 5a, 5b, 5e, 5f),
- les poutrelles (4a, 4b, 4e, 4f, 5a, 5b, 5e, 5f) pouvant être pliées perpendiculairement à la direction des poutrelles,
- les sondes individuelles étant disposées sous la forme d'une grille en deux dimensions,
- les directions des poutrelles (4a, 4b, 4e, 4f, 5a, 5b, 5e, 5f) contenant avec les deux directions de la grille (a, b) un angle différent de 0° ou de 180°, et
- les longueurs des poutrelles (4a, 4b, 4e, 4f, 5a, 5b, 5e, 5f) étant supérieures aux écarts de la grille,

**caractérisé en ce**

- **que** les poutrelles (4a, 4b, 4e, 4f, 5a, 5b, Se, 5f) des sondes individuelles sont à chaque fois soutenues sur la structure porteuse (1) par des éléments écarteurs (9i, 9j, 9k, 9l).

**2.** Réseau de sondes selon la revendication 1, avec lequel les poutrelles (4a, b, e, f, 5a, b, e, f) sont disposées dans un plan parallèle au plan de la structure porteuse (1).

**3.** Réseau de sondes selon l'une des revendications 1 ou 2, avec lequel les poutrelles (4a, b, e, f, 5a, b, e, f) peuvent à chaque fois être déviées vers l'extérieur sur un trajet perpendiculaire à l'axe longitudinal des poutrelles et avec lequel la longueur des pointes des sondes (3a, 3j, 3k, 3l) est supérieure au trajet maximum de la déviation.

4. Réseau de sondes selon l'une des revendications 1 à 3, avec lequel les poutrelles présentent une courbure en direction de la pointe des sondes.

5. Réseau de sondes selon l'une des revendications 1 à 4, avec lequel la structure porteuse commune (1) et les poutrelles présentent à chaque fois une électrode conductrice d'électricité (6, 7a - 7p).

6. Réseau de sondes selon l'une des revendications 1 à 5, avec lequel la structure porteuse présente des trous (2) associés aux pointes des sondes pour le passage de la lumière.

7. Microscope à sondes à balayage équipé d'un réseau de sondes selon l'une des revendications 1 à 6.

8. Microscope à sondes à balayage selon la revendication 7, avec lequel un circuit électronique de commande (29) est prévu pour commander en parallèle et indépendamment les unes des autres les électrodes des sondes individuelles pour détecter une déviation modifiée des sondes individuelles en direction des pointes des sondes.

EP 0 854 350 B1

## FIG. 1a

## FIG. 1b

FIG. 2a

# FIG.2b

EP 0 854 350 B1

FIG. 3

FIG. 2c